# EUROPÄISCHE PATENTSCHRIFT

(11) **EP 1 332 394 B1**
(45) Veröffentlichungstag und Bekanntmachung des Hinweises auf die Patenterteilung: **17.01.2007**
(21) Anmeldenummer: 01980101.8
(22) Anmeldetag: 08.11.2001
(51) Int. Cl.: G02B 6/42, G02B 6/38

(54) **"LICHTLEITERKOPPLUNG"**
OPTICAL WAVEGUIDE COUPLING
COUPLAGE DE GUIDES D'ONDES OPTIQUES

(30) Priorität: 10.11.2000 CH 219000; 17.11.2000 CH 224600
(43) Veröffentlichungstag der Anmeldung: 06.08.2003
(73) Patentinhaber: LINOS Photonics GmbH & Co. KG, 37081 Göttingen (DE)
(72) Erfinder: FLUCK, Daniel, CH-8424 Embrach (CH); JUAN FLORES, Miguel, CH-8853 Lachen (CH)
(74) Vertreter: Wagner, Carsten
(86) Internationale Anmeldenummer: PCT/CH2001/000656
(87) Internationale Veröffentlichungsnummer: WO 2002/039152

(56) Entgegenhaltungen:
- EP-A- 0 443 454
- EP-A- 0 682 280
- EP-A- 0 877 268
- SHAH V ET AL: "Packaging technology for high-power, singlemode-fiber-pigtailed pump laser modules for Er-doped fiber amplifiers" PROCEEDINGS OF THE ELECTRONIC COMPONENTS AND TECHNOLOGY CONFERENCE. (ECTC). SAN DIEGO, MAY 18 - 20, 1992, NEW YORK, IEEE, US, Bd. CONF. 42, 18. Mai 1992 (1992-05-18), Seiten 842-847, XP010052499 ISBN: 0-7803-0167-6

## Beschreibung

Die vorliegende Erfindung betrifft eine Vorrichtung zur optischen Kopplung eines von einer beliebigen optischen Komponente ankommenden Lichtstrahles mit einer weiterleitenden, lichtleitenden Faser.

Die Uebertragung von Informationen und Energie mittels Licht, welches über Glasfaserleiter gesandt wird, ist bereits seit über 30 Jahren bekannt. Die Uebertragung mittels ganzer Faserbündel erfolgt normalerweise nur über sehr kurze Distanzen, während über eine einzelne Glasfaserleitung Informationen über grosse Distanzen geleitet werden können. Hierbei kommen mehrere Kopplungsstellen vor, nämlich einerseits bei der Einspeisung des Lichtstrahles in die Faser und andererseits an verschiedenen Verbindungsstellen, an denen eine Kopplung von Faser zu Faser erfolgt. Jede Kopplung ist selbstverständlich mit einem gewissen Energieverlust verbunden. Die bestmögliche Kopplung zwischen zwei Fasern wird erreicht, indem die Enden der beiden Fasern zu glatten Oberflächen poliert und plan aufeinander gedrückt werden. Diese Art der Verbindung verlangt eine hochpräzise Ausrüstung und eignet sich nur für permanente Verbindungen.

Für die lösbare Kopplung einer Lichtübertragung wird ein kollimierter Lichtstrahl mittels einer Fokussierlinse oder eines Fokussierlinsensystems in eine weiterleitende Lichtfaser eingespiesen. Für eine möglichst verlustfreie Uebertragung an der Kopplungsstelle muss sichergestellt werden, dass eine hochgenaue axial fluchtende Ausrichtung des ankommenden Lichtstrahles mit dem lichtweiterführenden Lichtleiter möglich ist. Dies kann auf verschiedenste Arten erreicht werden. Aus der US-A-4'087'155 ist hierzu beispielsweise eine Steckerverbindung bekannt, bei der eine Faser-zu-Faser-Kopplung realisiert ist, bei der die zu koppelnden Fasern ohne optische Linsensysteme direkt möglichst achsgenau aufeinander zu geführt werden. Jede einzelne Faser ruht dabei zwischen mindestens drei elastisch gelagerten sphärischen Kugeln, die bei der Kopplung geringfügig verschoben werden können.

Eine völlig andere Lösung zeigt die US-A-4'296'999. Hier werden zwei Kopplungskörper möglichst genau und rigide miteinander verbunden, wobei man davon ausgeht, dass folglich praktisch keine axiale Verschiebung aus der zentrierten Position auftritt. Jede Faser dieser Verbindung ist je mit einer Linse beziehungsweise einem Linsensystem verbunden, und die Linsen beziehungsweise Linsensysteme lassen sich zwecks Fokussierung in axialer Richtung (z-Richtung) aufeinander zu beziehungsweise auseinander bewegen.

Besonders grundlegend ist das Dokument EP-B-0'198'657, in dem Vorrichtungen zur optischen Kopplung sowohl zwischen Lichtquelle und lichtleitender Faser als auch Kopplungen zwischen zwei lichtleitenden Fasern dargestellt und beschrieben sind. Hierbei sind insbesondere zwei Grundprinzipien offenbart. Im einen Fall ist mindestens ein Lichtleiter mit einer fokussierenden Linse in einer Hülse gehalten, und diese Hülse ist in einem Kopplungsrohr unter Zwischenlage eines über die Hülse gestülpten gummielastischen Schlauches gehalten. Mittels radial auf die Hülse wirkenden Schrauben lässt sich diese Hülse in den radialen Richtungen (x- und y-Richtung) verstellen, wodurch eine Winkelausrichtung auf die zweite, fix angeordnete Lichtleiteranordnung einstellbar ist. Eine fokussierende Einstellung in z-Richtung ist nicht vorgesehen, sondern wird konstruktiv als gegeben betrachtet. In einer zweiten Lösung sind die Kopplungskörper als Flansche gestaltet. Mittels peripher angeordneter Schrauben mit unterschiedlicher Steigung können die beiden Flansche einerseits in z-Richtung aufeinander zu bewegt werden und andererseits in x- und y-Richtung in einer gewünschten Winkellage verstellt werden.

Einrichtungen zum Kippen und/oder zum Achsverschieben (in z-Richtung) eines optischen Elementes gegenüber einer ebenen Basisfläche sind wohlbekannt. Derartige Einrichtungen beinhalten eine Drei- oder Mehrpunktauflagerung für Justierschrauben und eine oder mehrere Federn zum Ausüben einer Federkraft zwischen dem optischen Element und der Basisfläche. Dieses Prinzip wenden z. B. der in der DE-B-21'58'588 offenbarte Bausatz, das in der DE-B-911'549 offenbarte Winkelmessgerät und der in der US-A-4'641'915 offenbarte Faserkoppler an.

Die EP-A-0'443'454 beschreibt eine Vorrichtung zur Kopplung einer Faser an eine andere Komponente. Die Vorrichtung weist einen eingangsseitigen Kopplungskörper, einen Zwischenkopplungskörper und einen ausgangsseitigen Kopplungskörper auf. Der Zwischenkopplungskörper ist kugelgelenkartig im eingangsseitigen Kopplungskörper drehbar und arretierbar gehalten. Der ausgangsseitige Kopplungskörper ist im Zwischenkopplungskörper gelagert - entweder fest und ohne gegenseitige Verstellmöglichkeit oder axial verschieblich.

Auch wenn die bekannten Kopplungsvorrichtungen alle erforderlichen Bewegungen durchführen konnten, war die Justierung trotzdem noch sehr zeitaufwendig und benötigte entsprechende Erfahrung. Dies liegt daran, dass bei den bekannten Lösungen sowohl die Winkelverstellung als auch die Parallelverschiebung innerhalb der xy-Ebene durch dieselben Schrauben zu erfolgen hat. Es ist somit bei den Lösungen gemäss dem Stand der Technik unweigerlich so, dass bei der Winkelverstellung auch eine geringfügige Versetzung erfolgt. Diese geringfügige Verschiebung aus der Achse hat man folglich oftmals in Kauf genommen, um eine abermalige Justierung, mit eventuell wiederum einer Verstellung der Winkellage, zu vermeiden.

Es ist folglich die Aufgabe der vorliegenden Erfindung, eine Vorrichtung zu schaffen, bei der die Winkellageverstellung und die Parallelverschiebung der eingangs- und ausgangsseitigen Kopplungskörper relativ zueinander getrennt vorgenommen werden können.

Diese Aufgabe wird von einer Vorrichtung mit den Merkmalen des Patentanspruches 1 gelöst.

Weitere vorteilhafte Ausgestaltungsformen des Erfindungsgegenstandes gehen aus den abhängigen Ansprüchen hervor, und deren Bedeutung ist in der nachfolgenden Beschreibung mit Bezug auf die beiliegenden Zeichnungen erläutert.

Es zeigt:
- Figur 1: einen Vertikalschnitt durch eine erfindungsgemässe Vorrichtung, wobei eingangsseitig ein von einem Lasergerät kommender Lichtstrahl in eine ausgangsseitige Lichtleiterfaser eingespiesen wird.
- Figur 2: zeigt dieselbe Ansicht einer zweiten Ausführungsform einer Vorrichtung ähnlicher Bauweise.
- Figur 3: zeigt einen Vertikalschnitt durch eine dritte Ausführungsform einer Vorrichtung zum Koppeln zweier Lichtleiterfasern, und
- Figur 4: zeigt eine Aufsicht auf die ausgangsseitige Seite der erfindungsgemässen Kopplungsvorrichtung nach einer der Figuren 1-3.
- Figur 5: zeigt einen Vertikalschnitt durch eine vierte Ausführungsform einer erfindungsgemässen Kopplungsvorrichtung, bei der die Winkelverstellung mittels radial gerichteter Schrauben erfolgt.
- Figur 6: zeigt einen Vertikalschnitt durch eine fünfte Ausführungsform einer erfindungsgemässen Kopplungsvorrichtung, und
- Figur 7: zeigt eine Draufsicht auf den Zentralteil der ausgangsseitigen Seite der Kopplungsvorrichtung nach Figur 6.

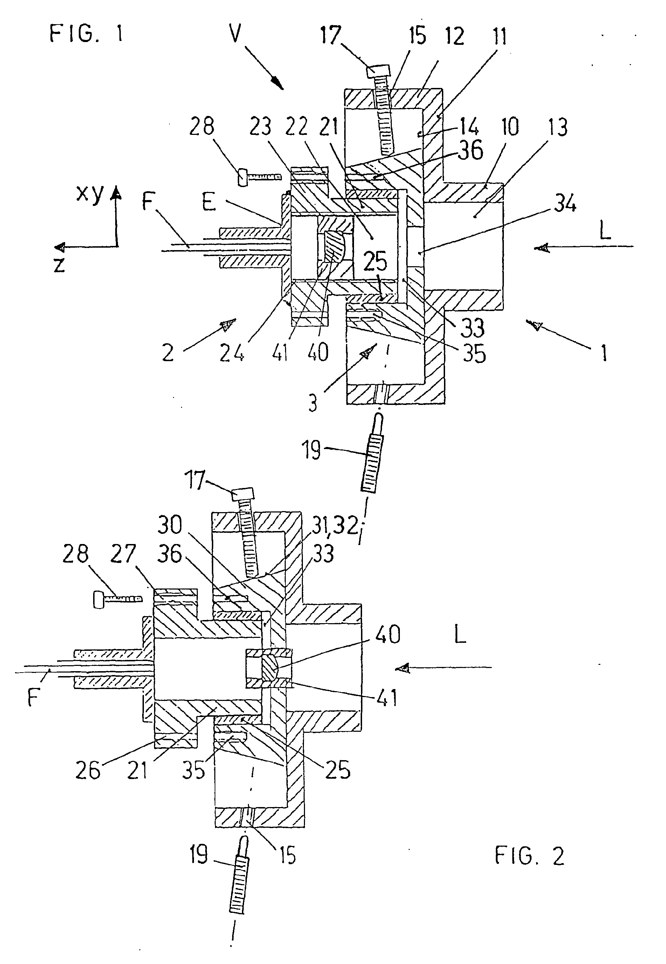

Die gesamte erfindungsgemässe Vorrichtung zur optischen Kopplung eines ankommenden Lichtstrahles von einer beliebigen optischen Komponente, mit einer weiterleitenden, lichtleitenden Faser F ist hier mit V bezeichnet. Die optische Kopplungsvorrichtung V, deren erstes Ausführungsbeispiel in **Figur 1** dargestellt ist, weist drei Hauptkomponenten auf. Dies sind ein eingangsseitiger Kopplungskörper 1, ein ausgangsseitiger Kopplungskörper 2 und ein dazwischen angeordneter Kopplungskörper, der als Zwischenkopplungskörper 3 bezeichnet wird. Da die Bezeichnungen "ausgangsseitiger Kopplungskörper" und "eingangsseitiger Kopplungskörper" in vielen Fällen beliebig austauschbar sind, wird nachfolgend in der Beschreibung meist nur von Kopplungskörpern gesprochen, wenn eines dieser beiden Elemente gemeint ist, während das dazwischen liegende Element immer als "Zwischenkopplungskörper" bezeichnet ist. Der eingangsseitige Kopplungskörper 1 ist in seiner Gestalt praktisch nur davon abhängig, wie die optische Komponente auf der Eingangsseite aussieht. Als optische Komponenten kommen beispielsweise die Lichtquelle, insbesondere ein Lasergerät, ein Strahlteiler oder eine eingangsseitige Lichtleiterfaser in Frage.

Der eingangsseitige Kopplungskörper 1 hat ein Rohrstück 10 mit einem endständigen Flansch 11, an dessen Peripherie ein umlaufender Kragen 12 angeformt ist. Das Rohrstück 10 bildet gleichzeitig die zentrische Durchführung 13 des eingangsseitigen Kopplungskörpers 1. Die vom Kragen 12 begrenzte Fläche des Flansches 11 ist als plane Fläche 14 gestaltet. Diese plane Fläche 14 ist hochgenau gefertigt und dient als Gleitfläche für den darauf liegenden Zwischenkopplungskörper 3. Im Kragen 12 sind mehrere, vorzugsweise vier regelmässig über den Umfang verteilte und zum Zentrum hin gerichtete Gewindebohrungen 15 angeordnet. Die vier Gewindebohrungen 15 dienen der Aufnahme von zwei ersten Justierschrauben 17 bzw. von zwei Gewindefederstiften 19. Eine fünfte Gewindebohrung 16, die mittig zwischen zwei benachbarten Gewindebohrungen 15 angeordnet ist, dient zur Aufnahme einer ersten Arretierschraube 18.

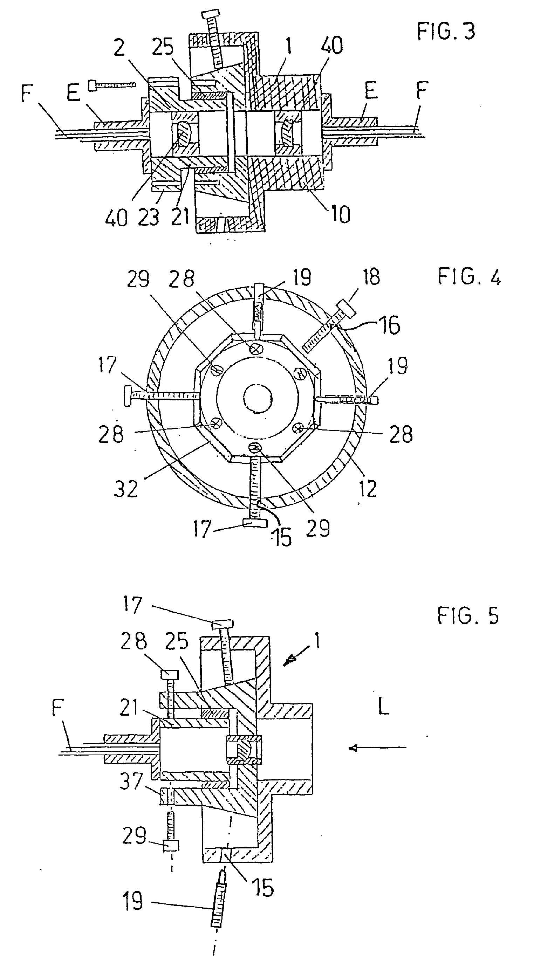

Auf der planen Fläche 14 aufliegend ist der Zwischenkopplungskörper 3 verschiebbar angeordnet. Dieser Zwischenkopplungskörper 3 hat die Gestalt eines Kegelstumpfes. Hierbei kann es sich um einen zylindrischen Kegelstumpf oder einen Kegelstumpf mit mehreckiger Grundfläche handeln. Um eine Verdrehung des Kegelstumpfes 3 auf der planen Fläche 14 zu verhindern, wird man vorzugsweise an deren Mantelfläche 31 Phasen 32 anschleifen, auf die die entsprechenden ersten Justierschrauben 17, ersten Arretierschrauben 18 bzw. Gewindefederstifte 19 anliegen. Dies ist am deutlichsten aus der **Figur 4** ersichtlich.

Die zwei ersten Justierschrauben 17 stehen senkrecht zueinander, so dass die eine erste Justierschraube eine Verschiebung in der x-Achsen-Richtung und die andere erste Justierschraube in der y-Achsen-Richtung bewirkt. Jeder ersten Justierschraube 17 diametral gegenüber ist ein Gewindefederstift 19 angeordnet, wobei sowohl die ersten Justierschrauben 17 wie auch die Gewindefederstifte 19 in Gewindebohrungen 15 gehalten sind, die den Kragen 12 in Richtung zur Zentrumsachse durchsetzen. Zwischen den beiden Gewindefederstiften 19 ist eine erste Arretierschraube 18 angeordnet, die ebenfalls auf die Zentrumsachse hin gerichtet ist.

Die Gewindefederstifte 19 können auch durch andere Elemente ersetzt werden, welche die Aufgabe haben, eine abstossende Kraftkomponente zwischen dem Kragen 12 und dem Zwischenkopplungskörper 3 zu erzeugen und so den Zwischenkopplungskörper 3 an die ersten Justierschrauben 17 anzudrücken. Eine Alternative zu den Gewindefederstiften 19 wäre z. B. eine im Volumen zwischen dem Kragen 12 und dem Zwischenkopplungskörper 3 angebrachte elastische Masse. Statt der Gewindefederstifte 19 können aber auch weitere Schrauben eingesetzt werden. Diese alternative Variante umfasst also drei oder mehr Schrauben, die in den Gewindebohrungen 15 des Kragens 12 eingeschraubt sind und den Zwischenkopplungskörper fest halten. Dabei erübrigt sich eine Unterscheidung zwischen Justier- und Arretierschrauben.

Dank der geneigten Mantelfläche beziehungsweise den geneigten angeschliffenen Phasen 32 üben die ersten Justierschrauben 17, die ersten Arretierschrauben 18 und die Gewindefederstifte 19 auf den Kegelstumpf 30 eine Kraftkomponente aus, die die Andruckkraft des Kegelstumpfes 30 auf die plane Fläche 14 bewirkt. Diese Andruckkraft lässt sich durch die Neigung der Gewindebohrungen 15 praktisch beliebig gestalten.

In den Kegelstumpf 30 ist von der oberen, kleineren Fläche aus zentrisch eine Sacklochbohrung 33 eingeformt. In deren Mitte ist eine zentrische Durchführung 34, vorzugsweise auch als zylindrische Bohrung, vorgesehen. In dieser zentrischen Sacklochbohrung 33 greift zentrisch gelagert der ausgangsseitige Kopplungskörper 2 ein. Auch dieser besteht aus einem Rohrstück 21, das mit einem endständigen Flansch 23 endet. Das Rohrstück 21 und der endständige Flansch 23 haben eine zentrische Durchführung 22. Die zentrische Durchführung 22 kann ein Innengewinde 24 aufweisen, in dem eine Linse 40 in einem Linsenträger 41 mehr oder weniger weit in Richtung der z-Achse mittels Schraubung verschiebbar ist.

Zwischen der umlaufenden Innenwand der Sacklochbohrung 33 und dem Rohrstück 21 ist ein elastischer Zylinderabschnitt 25 angeordnet. Dieser elastische Zylinderabschnitt 25 kann entweder durch einen gummielastischen Schlauchabschnitt gestaltet sein, oder die Innenwand der Sacklochbohrung 33 kann mit einer aufvulkanisierten Gummischicht beschichtet sein. Der elastische Zylinderabschnitt 25 ermöglicht ein leichtes Verkippen des ausgangsseitigen Kopplungskörpers 2 gegenüber dem Zwischenkopplungskörper 3 und somit auch gegenüber dem eingangsseitigen Kopplungskörper 1. Selbstverständlich kann der elastische Zylinderabschnitt 25 auch durch andere entsprechende elastische Mittel ersetzt werden, bspw. durch eine Mehrzahl von elastischen Elementen, die entlang der Innenwand der Sacklochbohrung 33 verteilt sind.

Zur Verstellung der Winkellage des ausgangsseitigen Kopplungskörpers 2 zum eingangsseitigen Kopplungskörper 1 sind im Flansch 23 des ausgangsseitigen Kopplungskörpers 2 abwechslungsweise Durchgangslöcher 26 und Gewindelöcher 27 angebracht. Durch die Durchgangslöcher 26 sind zweite Arretierschrauben 29 durchführbar, die in Gewindesacklöcher 35 eingreifen. Durch die Gewindelöcher 27 im Flansch 23 werden zweite Justierschrauben 28 eingesetzt, die sich im Zwischenkopplungskörper 3 in entsprechende Sacklöcher 36 abstützen. Die gewindefreien Durchgangslöcher 26 und Sacklöcher 36 müssen genügend weit sein, um eine gewisse Kippbewegung der Schrauben zuzulassen. Die durchzuführende Kippbewegung ist normalerweise sehr gering und beträgt zwischen 0 und einigen wenigen Graden. Wie ein zweites, in **Figur 2** illustriertes Ausführungsbeispiel zeigt, kann eine Linse 40 in einem Linsenträger 41 auch schraubverschieblich in der zentrischen Durchführung 34 des Zwischenkopplungskörpers 3 angeordnet sein. Der Lichtleiter F ist mit einem handelsüblichen Endstück E versehen, welches fest oder lösbar mit dem ausgangsseitigen Kopplungskörper 2 verbunden ist.

In der **Figur 3** ist praktisch analog den Figuren 1 und 2 eine ähnliche, dritte Ausführungsform dargestellt, wobei der eingangsseitige Kopplungskörper 1 ein dickwandigeres Rohrstück 10 aufweist, dessen eingangsseitige Oeffnung mit einem Endstück E versehen ist, in dem eine Lichtleiterfaser F gehalten ist. Die hier dargestellte Lösung zeigt somit eine Faser-zu-Faser Verbindung. Hierbei wird man im eingangsseitigen Kopplungskörper 1 eine kollimierende Linse oder ein kollimierendes Linsensystem 40 anbringen und im gegenüber liegenden Rohrstück 21 des ausgangsseitigen Kopplungskörpers 2 eine fokussierende Linse 40 oder ein fokussierendes Linsensystem anordnen. Ansonsten ist diese Ausführungsform baugleich mit den Lösungen gemäss der Figuren 1 und 2.

In der **Figur 5** ist eine vierte Ausführungsform dargestellt, bei der der Zwischenkopplungskörper 3 auf der oberen Deckfläche eine damit verbundene, zylindrische Verlängerung 37 aufweist. Diese zylindrische Verlängerung 37 ist einstückig mit dem Zwischenkopplungskörper 3 verbunden. Dies erlaubt die Möglichkeit, zweite Justierschrauben 28 und zweite Arretierschrauben 29 radial durch dieses zylindrische Verlängerungsstück 37 hindurch zu schrauben, die dann auf das Rohrstück 21 des ausgangsseitigen Kopplungskörpers 2 wirken. Der ausgangsseiteige Kopplungskörper 2 benötigt in diesem Falle keinen endständigen Flansch 23. Entsprechend ist diese Lösung besonders preiswert. Die zweiten Justierschrauben 28 und die zweiten Arretierschrauben 29 können in einer Ebene liegen, die bevorzugterweise senkrecht die zylindrische Verlängerung 37 schneidet. Um der Vorrichtung eine noch grössere Stabilität zu verleihen, könnten weitere (nicht eingezeichnete) zweite Justier- und Arretierschrauben angebracht werden, die axial von den in Fig. 5 eingezeichneten zweiten Justier- und Arretierschrauben 28, 29 beabstandet sind. Die zweiten Justierschrauben und Arretierschrauben 28, 29 sollten vom elastischen Zylinderabschnitt 25 genügend distanziert angeordnet sein, um eine optimale Kippbewegung durchführen zu können. Auch mit der in Fig. 5 gezeigten Ausführungsform kann wiederum der ankommende Lichtstrahl L in exakter Ausrichtung in die Lichtleiterfaser F eingespiesen werden, indem sich die Parallelverschiebung und die Kippbewegung unabhängig voneinander durchführen lassen.

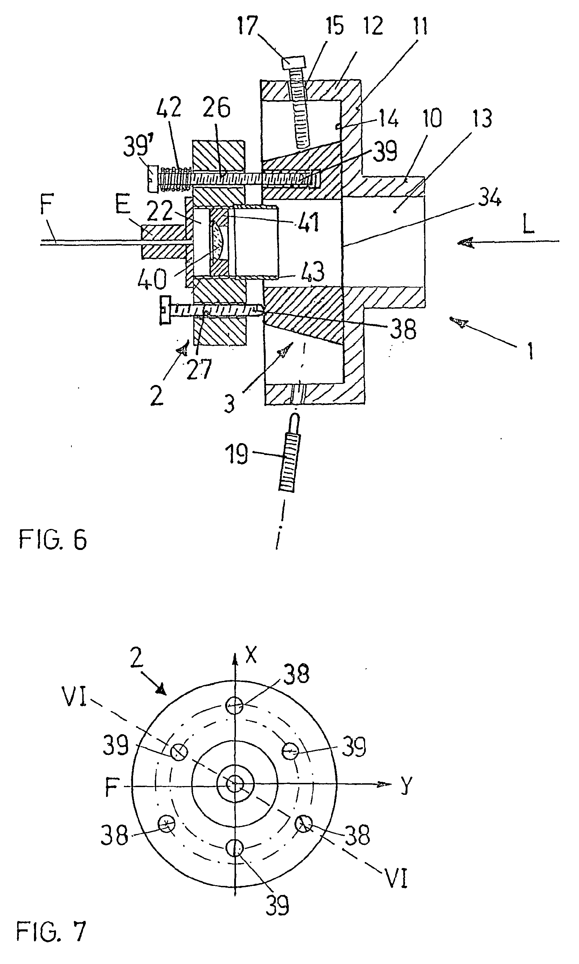

Eine weitere, fünfte Ausführungsform der erfindungsgemässen Vorrichtung ist im Vertikalschnitt in **Figur 6** und in einer teilweisen Draufsicht in **Figur 7** dargestellt. Der ausgangsseitige Kopplungskörper 2 ist hier als Scheibe mit einer zentrischen Durchführungsbohrung 22 bzw. als Ring gestaltet. Er ist mittels zweiter Justierschrauben 38 und zweiter Arretierschrauben 39 bezüglich des Zwischenkopplungskörpers 3 justierbar bzw. arretierbar.

Zur Justierung der Winkellage des ausgangsseitigen Kopplungskörpers 2 sind zweite Justierschrauben 38 vorgesehen. Die zweiten Justierschrauben 38 sind in entsprechende Gewindebohrungen 27 im ringförmigen ausgangsseitigen Kopplungskörper 2 eingeschraubt und stützen sich an der dem ausgangsseitigen Kopplungskörper 2 zugewandten Fläche des Zwischenkopplungskörpers 3 ab. Um eine Ueberdefinition zu vermeiden, arbeitet man vorzugsweise mit lediglich drei zweiten Justierschrauben 38. Diese wird man vorteilhafterweise gleichmässig über den Umfang verteilen.

Die zweiten Arretierschrauben 39 durchsetzen in Durchgangsbohrungen 26 den ringförmigen ausgangsseitigen Kopplungskörper 2 und greifen in Gewindesacklöchern 35 im Zwischenkopplungskörper 3 ein. Die zweiten Arretierschrauben 39 stützen sich mittels Federelemente 42 auf der Aussenseite des ausgangsseitigen Kopplungskörpers 2 ab. Die Federelemente 42 sind zwischen dem Schraubenkopf 39' der zweiten Arretierschrauben 39 und dem ausgangsseitigen Kopplungskörper 2 angeordnet. Beim Federelement 42 kann es sich um eine zylindrische Druckfeder oder um mehrere Federscheiben handeln, die ein entsprechendes Federpaket bilden. Als Federelemente 42 kommen aber auch elastomere Druckelemente mit relativ hoher Druckfestigkeit in Frage, wie zum Beispiel Kunststoffringe oder Kunststoffscheiben.

Die zweiten Arretierschrauben 39 und die Federelemente 42 haben die Aufgabe, eine Anziehungskraft zwischen dem ausgangsseitigen Kopplungskörper 2 und dem Zwischenkopplungskörper 3 auszuüben. Die zweiten Justierschrauben 38 üben eine entsprechende Gegenkraft aus. Dadurch wird eine exakt definierte Winkellage des ausgangsseitigen Kopplungskörpers 2 bezüglich des Zwischenkopplungskörpers 3 eingestellt. Die Durchgangsbohrungen 26, die von den zweiten Arretierschrauben 39 durchsetzt werden, müssen entsprechend so weit gestaltet werden, dass die zweiten Arretierschrauben 39 in den Durchgangsbohrungen 26 die erforderliche Kippbewegung des ausgangsseitigen Kopplungskörpers 2 zulassen.

An sich spielt die Anzahl der zweiten Arretierschrauben 39 keine wesentliche Rolle, doch wird man vorzugsweise auch drei zweite Arretierschrauben 39 vorsehen. Dabei ist immer zwischen zwei zweiten Justierschrauben 38 jeweils eine zweite Arretierschraube 39 vorgesehen.

Es ist vorteilhaft, wenn die zweiten Justierschrauben 38 möglichst weit vom Zentrum entfernt angeordnet sind. Hierdurch lässt sich eine um so genauere Einstellung bewirken. Hingegen ist dieses Erfordernis für die zweiten Arretierschrauben 39 weniger gegeben. Entsprechend zeigt die Figur 7 eine besonders bevorzugte Anordnungsform der zweiten Justierschrauben 38 und der Arretierschrauben 39.

Die Ausführungsform gemäss Figuren 6 und 7 erlaubt eine praktisch beliebige Distanzierung des ausgangsseitigen Kopplungskörpers 2 vom Zwischenkopplungskörper 3 in z-Richtung. Ist eine relativ grosse Winkelkorrektur in der xy-Richtung erforderlich, so muss entsprechend die Distanz in z-Richtung zwischen dem ausgangsseitigen Kopplungskörper 2 und dem Zwischenkopplungskörper 3 genügend gross sein, um diese Kippbewegung zu gestatten. Dies ist bei der Ausführungsform gemäss Figuren 6 und 7 problemlos möglich.

Es kann vorteilhaft sein, das Eindringen von Verunreinigungen und Fremdlicht von aussen in die Vorrichtung und insbesondere eine Verschmutzung der Linse 40 oder der Faserenden zu verhindern. Dazu kann eine Art optische Dichtung realisiert werden, wofür verschiedene Lösungen möglich sind. Nach Einstellung der Vorrichtung kann z. B. ein Schrumpfschlauch über der Vorrichtung angebracht werden. Eine weitere Möglichkeit besteht darin, in der zentrischen Durchführungsbohrung 22 des ausgangsseitigen Kopplungskörpers 2 eine Hülse 43 vorzusehen, welche sich über den Spalt zwischen dem ausgangsseitigen Kopplungskörper 2 und dem Zwischenkopplungskörper 3 hinweg erstreckt und in die weitere zentrische Durchführungsbohrung 34 des Zwischenkopplungskörpers 3 hineinragt.

Selbstverständlich kann die Linse oder das Linsensystem 40 auch im Zwischenkopplungskörper 3 angeordnet sein. In beiden Varianten kann die Linse oder das Linsensystem 40 in einem Linsenträger 41 gehalten und der Linsenträger 41 in z-Richtung verschiebbar gestaltet sein.

### Liste der Bezugszeichen

- E: Endstück
- F: lichtleitende Faser
- L: Lichtstrahl
- V: Vorrichtung

- 1: eingangsseitige Kopplungskörper
- 2: ausgangsseitige Kopplungskörper
- 3: Zwischenkopplungskörper

- 10: Rohrstück
- 11: Flansch
- 12: Kragen
- 13: zentrische Durchführung eingangsseitig
- 14: plane Fläche
- 15: Gewindebohrungen im Kragen
- 16: Gewindebohrung für Arretierschraube
- 17: erste Justierschrauben
- 18: erste Arretierschraube
- 19: Gewindefederstift
- 21: Rohrstück
- 22: zentrische Durchführung
- 23: endständiger Flansch
- 24: Innengewinde
- 25: elastischer Zylinderabschnitt
- 26: Durchgangslöcher
- 27: Gewindelöcher
- 28: zweite Justierschrauben
- 29: zweite Arretierschrauben
- 30: Kegelstumpf
- 31: Mantelfläche
- 32: Phasen
- 33: Sacklochbohrung
- 34: zentrische Durchführung im Zwischenkopplungskörper
- 35: Gewindesacklöcher
- 36: Sacklöcher
- 37: zylindrische Verlängerung
- 38: zweite Justierschrauben
- 39: zweite Arretierschrauben
- 40: Linse
- 41: Linsenträger
- 42: Federelement
- 43: Hülse

## Patentansprüche

1. Vorrichtung (V) zur optischen Kopplung eines ankommenden Lichtstrahls (L) von einer beliebigen optischen Komponente in eine weiterleitende lichtleitende Faser (F), beinhaltend einen eingangs- und ausgangsseitigen Kopplungskörper (1, 2) mit jeweils einer zentrischen Durchführung (13, 22) für die Durchleitung des Lichtes (L), wobei zwischen dem eingangsseitigen (1) und dem ausgangsseitigen Kopplungskörper (2) ein Zwischenkopplungskörper (3) mit zentrischer Durchführung (34) angeordnet ist,
**dadurch gekennzeichnet,**
**daß** der Zwischenkopplungskörper (3) in einem der eingangs- oder ausgangsseitigen Kopplungskörper (1, 2) zweidimensional in einer Ebene verschiebbar und arretierbar gehalten ist und
**daß** der andere eingangs- oder ausgangsseitige Kopplungskörper (1, 2) im Zwischenkopplungskörper (3) schwenkbeweglich und axial verschieblich gelagert ist.

2. Vorrichtung nach Anspruch 1, **dadurch gekennzeichnet, dass** der Kopplungskörper (1), in dem der Zwischenkopplungskörper (3) liegt, einen planen Flansch (11) aufweist, der senkrecht zur zentrischen Durchführung (13) verläuft und von einem umlaufenden Kragen (12) umgeben ist, der von mehreren ersten Justier- (17) und mindestens einer ersten Arretierschraube (18), die auf den Zwischenkopplungskörper (3) wirken, durchsetzt ist.

3. Vorrichtung nach Anspruch 2, **dadurch gekennzeichnet, dass** nur zwei auf das Zentrum des Flansches (11) ausgerichtete erste Justierschrauben (17) vorhanden sind, und dass jeder ersten Justierschraube (17) diametral gegenüber ein im Kragen (12) gehaltener Gewindefederstift (19) als Gegendruckelement angeordnet ist.

4. Vorrichtung nach Anspruch 3, **dadurch gekennzeichnet, dass** zwischen den beiden Gewindefederstiften (19) eine einzige, auf das Zentrum des Flansches (11) ausgerichtete erste Arretierschraube (18) vorhanden ist.

5. Vorrichtung nach Anspruch 1, **dadurch gekennzeichnet, dass** der Zwischenkopplungskörper (3) im Wesentlichen die Gestalt eines Kegelstumpfes (30) aufweist, der mit seiner planen Basisfläche auf der planen Fläche (14) des Flansches (11) des einen Kopplungskörpers (1) verschieblich aufliegt.

6. Vorrichtung nach den Ansprüchen 2 und 5, **dadurch gekennzeichnet, dass** an der Mantelfläche (31) des Kegelstumpfes (30) Phasen (32) angeschliffen sind, die als Auflageflächen der auf sie wirkenden ersten Justierschrauben (17), ersten Arretierschrauben (18) und, falls vorhanden, der Gewindefederstifte (19) dienen.

7. Vorrichtung nach den Ansprüchen 3 und 5, **dadurch gekennzeichnet, dass** die den Kragen (12) durchsetzenden Schrauben (17, 18) und Gewindefederstifte (19) so angeordnet sind, dass sie senkrecht auf die Mantelwandoberfläche (31) des kegelstumpfförmigen Zwischenkopplungskörpers (3) aufliegen.

8. Vorrichtung nach einem der Ansprüche 2-7, **dadurch gekennzeichnet, dass** der Zwischenkopplungskörper (3) eine zylindrische, gegenüber der zentrischen Durchführung (34) erweiterte Aufnahmebohrung (33) aufweist, in der unter Zwischenlage eines radial umlaufenden, elastischen Zylinderabschnittes (25) ein zylindrischer Rohrabschnitt (21) eines Kopplungskörpers (2) schwenkbeweglich gelagert ist.

9. Vorrichtung nach Anspruch 8, **dadurch gekennzeichnet, dass** der im kegelstumpfförmigen Zwischenkopplungskörper (3) lagernde Kopplungskörper (2) einen Flansch (23) aufweist, der von drei zweiten Arretierschrauben (29) durchsetzt ist, die in Gewindelöcher (35) auf der oberen Kegelstumpffläche eingreifen, und von drei zweiten Justierschrauben (28) in Gewindelöchern (27) im genannten Flansch (23) durchsetzt sind, die sich auf die obere Kegelstumpffläche direkt oder in Sacklöcher (36) abstützen.

10. Vorrichtung nach einem der Ansprüche 2-7, **dadurch gekennzeichnet, dass** der Kopplungskörper (2), in dem der Zwischenkopplungskörper (3) nicht liegt, im Wesentlichen als Scheibe ausgebildet ist und von drei zweiten Arretierschrauben (39) durchsetzt ist, die sich federnd (42) auf den einen Kopplungskörper (2) abstützen, den sie durchsetzen, und schraubverbunden mit dem Zwischenkopplungskörper (3) verbunden sind, und dass drei periphere Justierschrauben (38) vorhanden sind, welche schraubverbunden im einen Kopplungskörper (2) gehalten sind, welcher von den Arretierschrauben (39) frei beweglich durchsetzt ist, und sich abstützen auf den Zwischenkopplungskörper (3).

11. Vorrichtung nach Anspruch 8, **dadurch gekennzeichnet, dass** der Zwischenkopplungskörper (3) auf der oberen Deckfläche eine damit verbundene zylindrische Verlängerung (37) aufweist mit einer Durchführung, die mit der Durchführung (33, 34) im Kegelstumpf (30) axial fluchtet, wobei der eine Kopplungskörper (2) darin schwenkbeweglich mittels zweiter Justierschrauben (28) gehalten und mittels zweiter Arretierschrauben (29) fixierbar ist.

12. Vorrichtung nach einem der vorangehenden Ansprüche, **dadurch gekennzeichnet, dass** in der Vorrichtung (V) eine Linse (40) oder ein Linsensystem angeordnet ist.

13. Vorrichtung nach einem der vorangehenden Ansprüche, **dadurch gekennzeichnet, dass** einer der beiden Kopplungskörper (1) als Bulkkopf zum Anschluss an eine Laserlichtquelle gestaltet ist und dass mindestens eine kollimierende Linse (40) oder ein kollimierendes Linsensystem im anderen Kopplungskörper (2) oder dem Zwischenkopplungskörper (3) angeordnet ist.

14. Vorrichtung nach einem der vorangehenden Ansprüche, **dadurch gekennzeichnet, dass** an beiden Kopplungskörpern (1, 2) je eine Lichtleiterfaser (F) anschliesst, wobei am eingangsseitigen Kopplungskörper (1) eine kollimierende Linse (40) oder Linsensystem und im Zwischenkopplungskörper (3) oder im ausgangsseitigen Kopplungskörper (2) eine fokussierende Linse (40) oder ein fokussierendes Linsensystem angeordnet ist.

15. Vorrichtung nach einem der vorangehenden Ansprüche, **dadurch gekennzeichnet, dass** der andere eingangs- oder ausgangsseitige Kopplungskörper (2) im Zwischenkopplungskörper (3) elastisch schwenkbeweglich gelagert ist.

## Claims

1. Device (V) for optically coupling an incoming light beam (L) from any optical component to a relaying light-guiding fibre (F), containing an input-side and output-side coupling body (1, 2), each having a central leadthrough (13, 22) for guiding through the light (L), wherein an intermediate coupling body (3) with a central leadthrough (34) is arranged between the input-side (1) and the output-side coupling body (2), **characterised in that** the intermediate coupling body (3) is held so as to be displaceable and lockable two-dimensionally in one plane and **in that** the other input-side or output-side coupling body (1, 2) is mounted so as to be pivotably movable and axially displaceable in the intermediate coupling body (3).

2. Device according to claim 1, **characterised in that** the coupling body (1), in which the intermediate coupling body (3) lies, has a planar flange (11), which runs perpendicularly to the central leadthrough (13) and is surrounded by a peripheral collar (12), which is penetrated by a plurality of first adjustment screws (17) and at least a first locking screw (18), which act on the intermediate coupling body (3).

3. Device according to claim 2, **characterised in that** only two first adjustment screws (17) aligned with the centre of the flange (11) are present, and **in that** a threaded pin spring (19) as a counter pressure element, held in the collar (12), is arranged diametrically opposite each first adjustment screw (17).

4. Device according to claim 3, **characterised in that** a single first locking screw (18) aligned with the centre of the flange (11) is present between the two threaded pin springs (19).

5. Device according to claim 1, **characterised in that** the intermediate coupling body (3) substantially has the form of a truncated cone (30) which, with its planar base face, displaceably rests on the planar face (14) of the flange (11) of the one coupling body (1).

6. Device according to claims 2 and 5, **characterised in that** chamfers (32) are ground on the lateral surface (31) of the truncated cone (30) and are used as resting faces of the first adjustment screws (17), first locking screws (18) and, if present, the threaded pin springs (19) that act on them.

7. Device according to claims 3 and 5, **characterised in that** the screws (17, 18) penetrating the collar (12) and threaded pin springs (19) are arranged in such a way that they rest perpendicularly on the lateral wall surface (31) of the truncated cone-shaped intermediate coupling body (3).

8. Device according to any one of claims 2 to 7, **characterised in that** the intermediate coupling body (3) has a cylindrical receiving bore (33), which is widened relative to the central leadthrough (34), and in which, with interposition of a radially peripheral, elastic cylindrical section (25), a cylindrical tubular section (21) of a coupling body (2) is mounted so as to be pivotably movable.

9. Device according to claim 8, **characterised in that** the coupling body (2) mounted in the truncated cone-shaped intermediate coupling body (3) has a flange (23), which is penetrated by three second locking screws (29), which engage in threaded holes (35) on the upper truncated cone face, and are penetrated by three second adjustment screws (28) in threaded holes (27) in said flange (23), which are supported on the upper truncated cone face directly or in blind holes (36).

10. Device according to any one of claims 2 to 7, **characterised in that** the coupling body (2), in which the intermediate coupling body (3) does not lie, is substantially configured as a disc and is penetrated by three second locking screws (39) which are resiliently (42) supported on the coupling body (2), which they penetrate, and are connected with a screw connection to the intermediate coupling body (3), and **in that** three peripheral adjustment screws (38) are present which are held with a screw connection in the coupling body (2), which is penetrated by the locking screws (39) in a freely movable manner, and are supported on the intermediate coupling body (3).

11. Device according to claim 8, **characterised in that** the intermediate coupling body (3) on the upper outer face has a cylindrical extension (37) connected thereto, with a leadthrough which is axially flush with the leadthrough (33, 34) in the truncated cone (30), wherein the one coupling body (2) is held therein so as to be pivotably movable, by means of second adjustment screws (28) and can be fixed by means of second adjustment screws (29).

12. Device according to any one of the preceding claims, **characterised in that** a lens (40) or a lens system is arranged in the device (V).

13. Device according to any one of the preceding claims, **characterised in that** one of the two coupling bodies (1) is formed as a bulkhead for connection to a laser light source and **in that** at least one collimating lens (40) or a collimating lens system is arranged in the other coupling body (2) or the intermediate coupling body (3).

14. Device according to any one of the preceding claims, **characterised in that** a light guide fibre (F) adjoins the two coupling bodies (1, 2) in each case, wherein a collimating lens (40) or lens system is arranged on the input-side coupling body (1) and a focusing lens (40) or a focusing lens system is arranged in the intermediate coupling body (3) or in the output-side coupling body (2).

15. Device according to any one of the preceding claims, **characterised in that** the other input-side or output-side coupling body (2) is mounted so as to be elastically pivotably movable in the intermediate coupling body (3).

## Revendications

1. Dispositif (V) pour le couplage optique d'un rayon de lumière incident (L) d'un composant optique quelconque dans une fibre conductrice de lumière (F) qui continue de le conduire, contenant un corps de couplage (1, 2) côté entrée et sortie avec respectivement un passage central (13, 22) pour la transmission de la lumière (L), sachant qu'entre les corps de couplage côté entrée (1) et côté sortie (2) est disposé un corps de couplage intermédiaire (3) avec un passage central (34),
**caractérisé en ce que**
le corps de couplage intermédiaire (3) est maintenu dans un des corps de couplage côté entrée ou côté sortie (1, 2), de façon décalable dans deux dimensions dans un plan et verrouillable et
**en ce que** l'autre corps de couplage côté entrée ou côté sortie (1, 2) est monté mobile en basculement et décalable axialement dans le corps de couplage intermédiaire (3).

2. Dispositif selon la revendication 1, **caractérisé en ce que** le corps de couplage (1) dans lequel se trouve le corps de couplage intermédiaire (3) comporte une bride plane (11) qui s'étend perpendiculairement au passage central (13) et est entourée d'un collet périphérique (12) qui est traversé par plusieurs premières vis de réglage (17) et au moins une première vis de blocage (18) qui agissent sur le corps de couplage intermédiaire (3).

3. Dispositif selon la revendication 2, **caractérisé en ce qu'**il n'y a que deux premières vis de réglage (17) dirigées sur le centre de la bride (11) et **en ce que** du côté diamétralement opposé à chaque première vis de réglage (17) est disposée en tant qu'élément de contre-pression une goupille élastique filetée (19) maintenue dans le collet (12).

4. Dispositif selon la revendication 3, **caractérisé en ce qu'**entre les deux goupilles élastiques filetées (19), il y a une seule première vis de blocage (18) dirigée vers le centre de la bride (11).

5. Dispositif selon la revendication 1, **caractérisé en ce que** le corps de couplage intermédiaire (3) présente essentiellement la forme d'un tronc de cône (30) qui repose de façon décalable avec sa surface de base plane sur la surface plane (14) de la bride (11) de l'un des corps de couplage (1).

6. Dispositif selon les revendications 2 et 5, **caractérisé en ce que** des chanfreins (32) sont meulés sur la surface périphérique (31) du tronc de cône (30), qui servent de surfaces d'appui des premières vis de réglage (17), des première vis de blocage (18) et, s'il y en a, des goupilles élastiques filetées (19), agissant sur eux.

7. Dispositif selon les revendications 3 et 5, **caractérisé en ce que** les vis (17, 18) et les goupilles élastiques filetées (19) traversant le collet (12) sont disposées de telle sorte qu'elles reposent perpendiculairement sur la surface périphérique (31) du corps de couplage intermédiaire (3) en forme de tronc de cône.

8. Dispositif selon l'une des revendications 2 à 7, **caractérisé en ce que** le corps de couplage intermédiaire (3) comporte un trou de logement (33) cylindrique, élargi par rapport au passage central (34), dans lequel, moyennant l'intercalage d'un tronçon de cylindre élastique radialement périphérique (25), un tronçon de tube cylindrique (21) d'un corps de couplage (2) est monté mobile en basculement.

9. Dispositif selon la revendication 8, **caractérisé en ce que** le corps de couplage (2) monté dans le corps de couplage intermédiaire (3) en forme de tronc de cône comporte une bride (23) qui est traversée par trois deuxièmes vis de blocage (29), qui viennent en prise dans des trous taraudés (35) sur la surface supérieure du tronc de cône, et sont traversées par trois deuxièmes vis de réglage (28) dans des trous taraudés (27) dans ladite bride (23), qui s'appuient directement ou dans des trous borgnes (36) sur la surface supérieure du tronc de cône.

10. Dispositif selon l'une des revendications 2 à 7, **caractérisé en ce que** le corps de couplage (2) dans lequel le corps de couplage intermédiaire (3) ne se trouve pas est essentiellement configuré comme disque et est traversé par trois deuxièmes vis de blocage (39) qui s'appuient élastiquement (42) sur l'un des corps de couplage (2) qu'elles traversent et qui sont reliées par vissage au corps de couplage intermédiaire (3), et **en ce qu'**il y a trois vis de réglage périphériques (38) qui sont maintenues par vissage dans un corps de couplage (2), lequel est traversé de façon librement mobile par les vis de blocage (39), et s'appuient sur le corps de couplage intermédiaire (3).

11. Dispositif selon la revendication 8, **caractérisé en ce que** le corps de couplage intermédiaire (3) comporte sur la surface de couverture supérieure une rallonge cylindrique (37) reliée à cette dernière avec un passage qui est aligné axialement avec le passage (33, 34) dans le tronc de cône (30), l'un des corps de couplage (2) étant maintenu dans celui-ci de façon mobile en basculement au moyen de deuxièmes vis de réglage (28) et peut être fixé au moyen de deuxièmes vis de blocage (29).

12. Dispositif selon l'une des revendications précédentes, **caractérisé en ce qu'**une lentille (40) ou un système de lentilles est disposé(e) dans le dispositif (V).

13. Dispositif selon l'une des revendications précédentes, **caractérisé en ce qu'**un des deux corps de couplage (1) est configuré comme tête d'étanchéité pour le raccordement à une source de lumière laser, et **en ce qu'**au moins une lentille de collimation (40) ou un système de lentilles de collimation est disposé(e) dans l'autre corps de couplage (2) ou dans le corps de couplage intermédiaire (3).

14. Dispositif selon l'une des revendications précédentes, **caractérisé en ce que** sur chacun des deux corps de couplage (1, 2) se raccorde une fibre conductrice de lumière (F), sur le corps de couplage côté entrée (1) est disposé(e) une lentille (40) ou un système de lentilles de collimation et dans le corps de couplage intermédiaire (3) ou dans le corps de couplage côté sortie (2) une lentille (40) ou un système de lentilles de focalisation.

15. Dispositif selon l'une des revendications précédentes, **caractérisé en ce que** l'autre corps de couplage côté entrée ou côté sortie (2) est monté élastiquement de façon mobile en basculement dans le corps de couplage intermédiaire (3).
